# EUROPEAN PATENT SPECIFICATION

(11) **EP 3 805 684 B1**
(45) Date of publication and mention of the grant of the patent: **03.05.2023**
(21) Application number: 20200119.4
(22) Date of filing: 05.10.2020
(51) Int. Cl.: F28C 3/08, F28F 25/02, G05D 7/06, G05D 23/19, F28B 1/06, F28B 11/00, F28D 1/02, F28D 3/04, F28D 5/00, F28F 27/00, F28D 21/00, F28C 1/14

(54) **HEAT EXCHANGE APPARATUS AND METHOD**
WÄRMEAUSTAUSCHAPPARAT UND VERFAHREN
DISPOSITIF D'ECHANGE DE CHALEUR ET PROCÉDÉ

(30) Priority: 09.10.2019 IT 201900018287
(43) Date of publication of application: 14.04.2021
(73) Proprietor: Aquatech S.r.l., 30036 Santa Maria di Sala (VE) (IT)
(72) Inventor: CALDATO, Roberto, 31100 Treviso (IT); CAPPELLINI, Davide, 26029 Soncino (CR) (IT); CAZZARO, Paolo, 35020 Saonara (PD) (IT)
(74) Representative: Villanova, Massimo

(56) References cited:
- EP-A1- 1 698 847
- EP-A1- 3 306 247
- EP-A2- 1 035 397
- US-A1- 2012 067 546
- US-A1- 2018 224 174
- US-B2- 9 243 847

## Description

### Background of the invention

The invention relates to a heat exchange apparatus and/or method, in particular for cooling a process fluid by a heat exchanger in which a flow of air removes the heat from the process fluid.

Specifically, but not exclusively, the invention can be applied to a process fluid consisting of a liquid, a gas, a condensate coolant, or any other fluid from which heat has to be removed.

In particular, reference is made to an apparatus and/or a method in which a heat exchanger comprises a system of tubes in which a process fluid to be cooled flows and in which, when the temperature of the gas that is usable for cooling (in general air at ambient temperature) is greater than the temperature at which it is intended to cool the process fluid, at least one evaporative body is used (in general a body made of cellulose material, in particular in the shape of a panel) that is placed in the flow of air before the heat exchanger and is supplied with an evaporative liquid (water) in order to humidify and cool the air, in particular in order to bring the ambient air to the wet bulb temperature.

One problem of the prior art is to save the water used to wet the evaporative body.

Patent publication WO 2018/148460 A1 shows a cooling device with a plurality of adiabatic panels, a water distribution system, a sensor for the presence of discharge water and a modulate valve for modulating the quantity of water distributed on the basis of the aforesaid sensor, in which the adiabatic panels can operate with separate modulating valves and sensors.

Each of patent publications EP 3306247 A1, US 9243847 B2 and EP 1035397 A2 shows an apparatus as in the preamble to claim 1.

### Summary of the invention

One object of the invention is to provide a heat exchange apparatus and/or method that is alternative to those of the prior art.

One object of the invention is to devise an alternative solution to the problem of saving the water used for wetting the evaporative means.

One object of the invention is to make available an alternative solution to the problem of cooling a process fluid in an air heat exchanger even when the ambient air temperature is greater than the desired temperature at which it is intended to cool the process fluid.

One advantage is to make a heat exchange apparatus and/or method in which a compromise can be reached between saving of energy to move the air used to cool the process fluid and saving of water for wetting the evaporative means used to humidify the air.

One advantage is to provide a heat exchange apparatus, in particular a constructionally simple and cheap dry cooler.

These objects and advantages, and still others are achieved by an apparatus and/or a method according to one or more of the claims set out below.

In one embodiment, a heat exchange apparatus comprises a heat exchanger in which a process fluid to be cooled circulates, ventilation means for generating a flow of cooling gas that passes through the exchanger, evaporative means arranged before the exchanger to be wetted by an evaporative liquid to humidify the flow of gas, in which the evaporative means comprises several evaporative portions that are distinct from each other each of which is traversed by a respective fraction of the flow of gas, and in which the evaporative liquid is supplied selectively and independently to the various evaporative portions in function of the temperature of the process fluid that exits the exchanger.

### Brief description of the drawings

The invention can be better understood and implemented with reference to the attached drawings that illustrate embodiments thereof by way of non-limiting example, in which:
Figure 1 is a perspective view of a first embodiment of a heat exchange apparatus made according to the present invention;
Figure 2 is a perspective view of a second embodiment of a heat exchange apparatus made according to the present invention.

### Detailed description

For the sake of simplicity, identical elements of different embodiments have been indicated by the same numbers.

With reference to the aforesaid figures, overall with 1 a heat exchange apparatus has been indicated. The heat exchange apparatus 1 comprises, in particular, a dry cooler, or air cooler.

The apparatus 1 is configured, in particular, to cool a process fluid by a flow of a cooling gas. The process fluid may comprise, in particular, a liquid, a gas, a condensate coolant, or any other fluid from which heat has to be removed. The cooling gas may comprise, in particular, air, for example air removed from the environment.

The heat exchange apparatus 1 may comprise, in particular, at least one heat exchanger 2 comprising tube means provided with at least one inlet 3 of the process fluid to be cooled and with at least one outlet 4 of the cooled process fluid. The air-cooled heat exchanger 2 removes the heat from the process fluid, or work fluid, transferring the heat to the cooling gas (air). The tube means of the heat exchanger 2 may comprise, in particular, at least two tube batteries, for example in a V-shaped arrangement. The tube means may comprise, in particular, a system of tubes provided with fins. In particular, the tube means may comprise, as in the specific embodiment, at least one tube battery, for example finned, (in the specific embodiment a right and a left battery in a V-shaped arrangement), at least one inlet 5 manifold (for example one inlet 5 manifold for each battery), at least one outlet manifold 6 (for example one outlet manifold for each battery), at least one inlet connection (for example one inlet connection for each battery), at least one outlet connection (for example one outlet connection for each battery).

In particular, the tube means may comprise, as in these embodiments, at least two tube batteries (in which each battery may have, in particular, a flattened conformation, as a plate or panel) opposite one another, i.e. arranged on two sides opposite one another with respect to a separating plane (in these embodiments a vertical separating plane). The two tube batteries, which are spaced apart from one another opposite one another, may be, in particular, in a V-shaped arrangement or in an opposite parallel arrangement, so that the aforesaid separating plane may be, in particular, a plane of symmetry of the aforesaid arrangement.

The tube means may be made, in particular, of copper, aluminium, stainless steel, or other metals covered by special anti-corrosive paints. The fins of the tube means may be made, in particular, of copper, aluminium or other materials that can be painted or provided with particular treatments to withstand corrosion (for example salt corrosion).

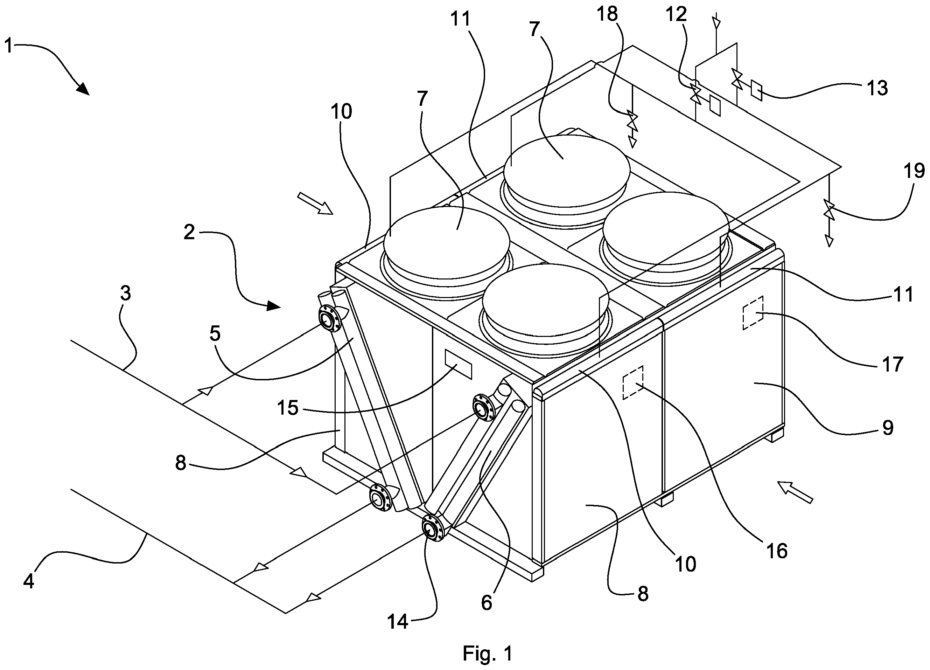

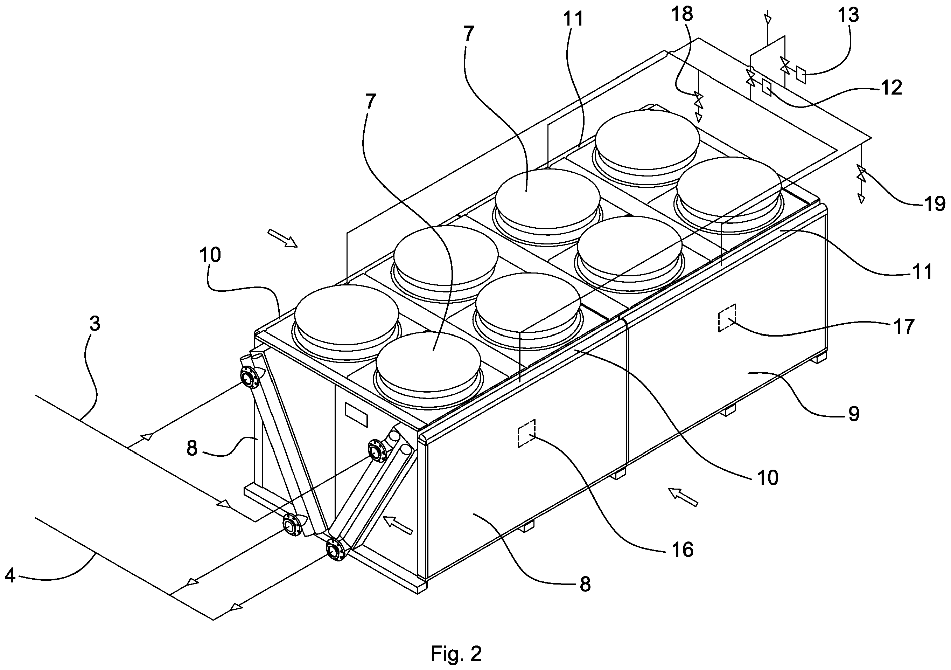

The heat exchange apparatus 1 may comprise, in particular, ventilation means 7 configured to generate a flow of a cooling gas (air) that passes through the tube means. The ventilation means 7 may comprise, in particular, at least one fan. The ventilation means 7 may comprise, in particular, at least one group of fans (for example fans arranged in a row) for each tube battery. In the specific embodiments, the ventilation means 7 comprises four fans (embodiment of Figure 1, two fans for each tube battery) and eight fans (embodiment of Figure 2, four fans for each tube battery). It is nevertheless possible to envisage the use of ventilation means with a different number of fans.

The tube means may comprise, in particular, at least two tube batteries that may be separated, as in these embodiments, by a space (that is traversed by two opposite flow fractions that merge upwards) above which the ventilation means 7 is arranged.

In use, the hot process fluid flows inside the tube means of the heat exchanger 2. The cooling gas (air) is passed between the tube means of the heat exchanger 2, moved by the ventilation means 7, by removing the heat from the process fluid.

The two batteries of tube means (left finned tube battery and right finned tube battery) may be, in particular, equivalent to one another so that the process fluid is divided equally between the two batteries, so half of the flowrate of the process fluid passes through a battery and the other half passes through the other battery. The ventilation means 7 may be configured, in particular, so that the number of fans operating on the side of one battery of tube means is equal to the number of fans operating on the side of the other battery of tube means.

The fans may be, in particular, equivalent to one another and be controlled to operate together at the same speed. For example, if a fan on the right switches off, also a fan on the left will switch off. It is possible to provide for the two batteries of the tube means operating simultaneously, treating the same flowrate of process fluid and being traversed by the same flowrate of cooling gas.

The heat exchange apparatus 1 may comprise, in particular, evaporative means (or adiabatic means) configured to receive (and be wetted by) an evaporative liquid and arranged to be traversed by the flow of cooling gas before the heat exchanger 2. The evaporative means may comprise, in particular, two or more evaporative portions that are distinct from each other. Each evaporative portion may be arranged for being traversed by a respective fraction of the cooling gas.

A first evaporative portion may comprise, in particular, at least one first evaporative body 8 (for example an adiabatic panel) situated on one side of the heat exchange apparatus (in particular next to one of the two batteries of tube means). A second evaporative portion may comprise, in particular, at least one second evaporative body 9 (for example an adiabatic panel) situated on the same side of the apparatus where the first evaporative body 8 is situated. The two evaporative bodies 8 and 9 may be, in particular, arranged next to one another so as to be traversed by two respective fractions of the flow (alongside one another) which are concordant in the same flow direction. The two evaporative bodies 8 and 9 may comprise, in particular, two adiabatic panels arranged alongside each other, for example in an arrangement that is coplanar or almost coplanar of the panels, so as to form substantially a single adiabatic panel. The two evaporative bodies 8 and 9 may be, in particular, arranged reciprocally contiguously. The two evaporative bodies 8 and 9 may be, in particular, arranged on the same side with respect to the aforesaid (vertical) separating plane that divides the two reciprocally opposite tube batteries.

In particular, the first evaporative body 8 and the second evaporative body 9 may be, as in these embodiments, contiguous and aligned on one another so as to form substantially a single adiabatic wall, or a single evaporative body with a flow traversing surface that is equal to the sum of the flow traversing surface of the two evaporative bodies 8 and 9. In particular, the first evaporative body 8 and the second evaporative body 9 may be so arranged that the direction of the flow fraction that traverses the first evaporative body 8 is concordant or is prevalently concordant with (in particular substantially parallel to) the direction of the flow fraction that traverses the second evaporative body 9.

A first evaporative portion may comprise, as in the illustrated embodiments, two first evaporative bodies 8 (for example two adiabatic panels) situated on two opposite sides of the heat exchange apparatus (in particular on two opposite sides of the tube means, for example alongside the two batteries of tube means). A second evaporative portion may comprise, as in the illustrated embodiments, two second evaporative bodies 9 (for example two adiabatic panels) situated on two opposite sides of the heat exchange apparatus (in particular on two opposite sides of the tube means, for example alongside the two batteries of tube means, where in the figures only the second evaporative body 9 on the right is visible) and each is arranged contiguously alongside a respective first evaporative body 8 of the first evaporative portion. In practice, the two evaporative bodies, first 8 and second 9, on one side of the apparatus 1 are contiguous and aligned so as to form substantially a single adiabatic wall, just like the two evaporative bodies, first 8 and second 9, on the side opposite the apparatus 1.

It is possible to provide an apparatus with a third evaporative portion that comprises one or more third evaporative bodies, each of which is arranged alongside a respective second evaporative body, so as to arrange, on the same side of the apparatus, three (or more than three) evaporative bodies aligned alongside one another.

Each evaporative portion may be, in particular, arranged at a respective portion of the ventilation means 7. In particular, each evaporative portion may be arranged on two opposite sides of a respective group of fans. In the embodiment of Figure 1 each evaporative portion is arranged on the two sides of a unit formed by two fans, whereas in the embodiment of Figure 2 each evaporative portion is arranged on the two sides of a unit formed by four fans. It is possible to provide other embodiments that are not illustrated, in which the evaporative portions are configured differently, both in number and in arrangement. It is possible, for example, to arrange two distinct evaporative portions arranged on two opposite sides of the same group of fans, or provide three, or four, or more than four, evaporative portions.

As said, the evaporative means may comprise several evaporative bodies (first 8 and second 9). In the illustrated embodiments, the evaporative means comprises two evaporative bodies 8 and 9 for each tube battery (two evaporative bodies 8 and 9 on the right and two evaporative bodies 8 and 9 on the left). It is possible to provide, in other embodiments, a different number (for example one, or three, or four) of evaporative bodies for each tube battery.

Each evaporative body may comprise, in particular, a body made of cellulose material, or aluminium (aluminium mesh), or of yet another material, for example a body made of paper or cardboard, in particular a body comprising an open mesh structure for receiving the flow of cooling gas (air). Each evaporative body may comprise, in particular, a body permeable to the flow of cooling gas (air). Each evaporative body 8 and 9 may comprise, in particular, an adiabatic buffer. Each evaporative body 8 and 9 may comprise, in particular, a body in the form of a slab or panel (adiabatic panel), or with a dimension (thickness) that is much less than the other two dimensions. In the specific embodiment, the evaporative bodies 8 and 9, in the form of panels, are arranged in a vertical position.

The heat exchange apparatus 1 may comprise, in particular, supply means for supplying an evaporative liquid that is suitable for so wetting the evaporative means as to humidify the flow of cooling gas that passes through the wetted evaporative means. The supply means may comprise, in particular, a supply circuit of the evaporative liquid comprising at least one inlet of the evaporative liquid and at least one outlet of the evaporative liquid. The supply means may comprise, in particular, distributing means that may comprise, as in the illustrated means, two or more distribution portions, each of which distributes the evaporative liquid on a respective evaporative portion. The distributing means may comprise, for example, a plurality of distributors 10 and 11 each operationally associated with a respective evaporative body 8 and 9.

The supply means may be configured, in particular, to supply the evaporative liquid independently and selectively to each evaporative portion. The supply circuit of the evaporative liquid may comprise, in particular, two or more circuit portions configured to supply independently the two or more portions of the evaporative means. In the illustrated embodiments, the supply circuit comprises a first circuit portion that supplies the first evaporative portion (i.e. the two first evaporative bodies 8) and a second circuit portion that supplies the second evaporative portion (i.e. the two second evaporative bodies 9). Each evaporative portion may be supplied with the evaporative liquid independently of the other operating portions.

Each circuit portion may comprise, in particular, control means for controlling the flowrate configured to control the flowrate of the evaporative liquid in the respective circuit portion. The control means of the flowrate may comprise, in particular, at least two flowrate control valves 12 and 13 each arranged in a respective portion of the supply circuit to adjust the flowrate of the evaporative liquid that is supplied to the distributors 10 and 11 independently. The flowrate control valves 12 and 13 may comprise, in particular, valves of the ON-OFF type, or flowrate modulating valves (with continuous or scales modulation), or proportional valves or valves of yet another type.

It is possible to provide, in other embodiments that have not been illustrated, control means for controlling the flowrate comprising a pump for each portion of supply circuit, for example a variable flowrate pump. The use of pumps may be provided, in particular, in a supply circuit that includes (in embodiments that have not been illustrated) a recirculating system for recirculating the evaporative liquid.

Each evaporative body may be wetted and/or saturated by making the evaporative liquid drip (for example by dropping from the distributors 10 and 11) onto an end (in particular the upper end) of the evaporative body.

The air removed from the environment may be passed through the evaporative means, so that the air will come into contact with the water with which the evaporative means is impregnated and will increase the humidity thereof, for example up to a degree of saturation determined by the evaporative means, so that the air downstream of the evaporative means will have humidity that is greater than the ambient air. This enables an adiabatic operating mode to be devised in which the air, by traversing the evaporative means, decreases its temperature, in particular to the wet bulb temperature related to the humidity transferred by the evaporative means, and then passes through the tube means, so that the heat exchanger 2 can use cooling air at a lower temperature than the temperature of the ambient air.

The heat exchange apparatus 1 may comprise, in particular, at least one temperature sensor 14 arranged for measuring the temperature Tout of the (cooled) process fluid at the outlet of the tube means. The temperature sensor 14 may be arranged, for example, at or near an outlet connection of the heat exchanger 2, or of an outlet manifold 6, or of the outlet 4 of the process fluid. It is possible to provide, in other embodiments that have not been illustrated, the use of two or more temperature sensors arranged, in particular, at two or more points that are different from one another and/or distant of the path of the process fluid.

The heat exchange apparatus 1 may comprise, in particular, control means configured to receive signals of the various sensors and check the various actuators of the apparatus. The control means may comprise, in particular, programmable electronic control means. The control means may comprise, for example, a CPU. The control means may be configured, in particular, to control the supply means of the evaporative liquid on the basis of the temperature Tout measured by the temperature sensor 14. The control means may be configured, in particular, by computer program instructions. The control means may comprise, in particular, feedback control means. The type of control may comprise, in particular, a PID, or PI control, or control of yet another type.

The heat exchange apparatus 1 may comprise, in particular, sensor means 15 to measure the humidity of the cooling gas before it traverses the evaporative means (humidity of the ambient area). The sensor means 15 may comprise, in particular, at least one humidity sensor arranged for detecting the humidity of the cooling gas in the environment upstream of the evaporative means. The sensor means 15 may be configured, in particular, to measure the relative humidity and/or the absolute humidity and/or the specific humidity. In the specific embodiment, the sensor means 15 comprises at least one sensor arranged to measure the relative humidity of the ambient area.

The heat exchange apparatus 1 may comprise, in particular, two or more humidity sensors 16 and 17 (at least one for each evaporative portion) to measure the humidity of the cooling gas between the evaporative means (evaporative bodies 8 and 9) and the tube means. Each humidity sensor 16 and 17 may be configured, in particular, to measure the relative humidity and/or the absolute humidity and/or the specific humidity. In the specific embodiment, each humidity sensor 16 and 17 comprises a sensor to measure the relative humidity of the air that has traversed the evaporative means and has not yet traversed the tube means. The humidity sensors 16 and 17 have been shown by a dashed line in the figures as they are behind the evaporative bodies 8 and 9.

The supply circuit may comprise, in particular, two or more discharge valves 18 and 19, one for each circuit portion, each of which is controlled by the control means so as to be open when the flowrate of the evaporative liquid in the circuit portion is nil (respective control valve of flowrate 12 or 13 closed) and, vice versa, is commanded to be closed when the flowrate of the evaporative liquid in the circuit portion is not nil (respective control valve of flowrate 12 or 13 open). In this manner, when the adiabatic mode is not used in an evaporative portion, the pipes that supply the inactive evaporative portion are empty, as the evaporative liquid present in tubes can be discharged (by gravity) by the respective discharge valve 18 or 19, to avoid stagnating liquid and reduce the risk of the presence and formation of bacteria (for example legionella bacteria).

The programmable electronic control means may be configured (programmed with computer programme instructions) to control the supply means (flowrate control valves 12 and 13) so as to supply the evaporative liquid to at least one of the aforesaid evaporative portions and not to supply the evaporative liquid to at least one other of the aforesaid evaporative portions, performing the check according to the temperature measured by the temperature sensor 14.

The control means may be configured, in particular, to control the supply means such that, when at least one evaporative portion is not supplied with the evaporative liquid, if the temperature of the process fluid measured by the sensor 14 at the outlet of the tube means is greater than or the same as a set value Tsup, then the aforesaid evaporative portion starts to be supplied.

In particular, the supply of the evaporative liquid to evaporative portions is activated progressively one at a time, i.e. only to one evaporative portion and not to the other or to the others at least until the temperature of the process fluid at the outlet of the tube means returns to be greater than or the same as the set value Tsup, in which case the supply of the evaporative liquid to another evaporative portion is activated. This selective and independent supply of the evaporative liquid, with progressive activation of the various evaporative portions one at a time, enables saving of the evaporative liquid and/or the wetting time to be rationalized, which causes wear to the various evaporative portions.

In practice, when the adiabatic mode of the heat exchange apparatus 1 has to be activated, only one of the evaporative portions is initially activated and not the one or the others. If after a period of time, the temperature of the process fluid at the outlet of the heat exchanger 2 is still greater than Tsup, or has returned to be greater than Tsup, then only another evaporative portion is activated, and so on according to the number of evaporative portions that form the evaporative means.

It is similarly possible to provide a gradual deactivation of the various evaporative portions, one at a time, in the case of a reduction in the heat exchange quantity required of the heat exchanger 2.

The control means may be configured, in particular, to control the supply means such that, when at least one evaporative portion is supplied with the evaporative liquid, if the temperature of the process fluid measured by the sensor 14 at the outlet of the tube means is less than or the same as a set value Tinf, then the aforesaid evaporative portion stops being supplied.

The control means may be configured, in particular, to control the supply means so as not to supply the evaporative liquid to at least one evaporative portion, for example the two evaporative bodies 8, in function of the humidity measured by the respective humidity sensor 16, in particular if the humidity measured by this sensor is greater than or the same as a set value.

The control means may be configured, in particular, to send a fault signal if an evaporative portion, for example the two evaporative bodies 8, is supplied with the evaporative liquid and if the humidity sensor 16 associated with this evaporative portion does not detect a certain increase in humidity, with respect to the humidity measured by the sensor means 15 of the external humidity, after a set period of time. The fault signal may be used, in particular, to activate an alarm or a maintenance warning directed at an operator and/or to interrupt the supply of the evaporative liquid to the affected evaporative portion.

The control means may be configured, in particular, so as to control the supply means so that the supply of the one or other evaporative portion is selected in function of the period of time in which each evaporative portion has been wetted with the evaporative liquid, so as to tend to an equilibrium of the periods of wetting time between the various evaporative portions. This enables almost uniform wear to the evaporative portions to be obtained.

The control means may be configured, in particular, to receive a lower limit Vinf of the flow of the cooling gas and to control the ventilation means 7 and the supply means on the basis of the temperature Tout measured by the temperature sensor 14, such that, when the flow V of the cooling gas is the same as the aforesaid lower limit Vinf and the supply flowrate of the evaporative liquid to at least one evaporative portion is not nil, if the temperature Tout measured is less than or the same as a set value Tinf, then the supply flowrate of the evaporative liquid is lowered (for example interrupted) in this evaporative portion whilst the flow V of the cooling gas is not modified. The aforesaid lower limit Vinf may be, in particular, a value greater than zero of the flow V of the cooling gas or greater than 50% of the maximum value of the flow V of the cooling gas, i.e. the value at maximum power of the ventilation means 7.

Ventilation V can mean, in particular, a parameter indicating the flowrate of the cooling gas supplied by the ventilation means 7, such as, for example, the operating speed of the supply means 7 and/or power absorbed by the ventilation means 7 and/or the effective flowrate of the cooling gas that traverses the heat exchanger 2, etc. Accordingly, in this description, the term "ventilation" V indicates any parameter indicating the flowrate of the cooling gas generated by the ventilation means 7.

The control means may be configured, in particular, to receive an upper limit Vsup of the flow of the cooling gas and to control the ventilation means 7 and the supply means on the basis of the temperature Tout measured by the temperature sensor 14 such that, when the flow V of the cooling gas is the same as the aforesaid upper limit Vsup and the supply flowrate of the evaporative liquid to at least one evaporative portion is nil, if the temperature Tout measured is greater than or the same as a set value Tsup, then the supply flowrate of the evaporative liquid starts to be dispensed to this evaporative portion whilst the flow V of the cooling gas is not modified.

In the embodiments disclosed here, the two first evaporative bodies 8 make up the first evaporative portion. The first evaporative bodies 8 may be supplied, in particular, by the same portion of supply circuit provided with the same control valve 12 for controlling the flowrate of the evaporative liquid.

In the embodiments disclosed here, the two second evaporative bodies 9 make up the second evaporative portion. The second evaporative bodies 9 may be supplied, in particular, by the same portion of supply circuit provided with the same control valve 13 of the flowrate of the evaporative liquid.

It is possible, in other embodiments that have not been illustrated, to arrange other evaporative portions, in particular formed by evaporative bodies arranged in a row with the evaporative bodies 8 and 9 along a longitudinal axis of the heat exchange apparatus 1.

The control means may be configured, in particular, so that when the heat load required by a user increases and it is desired that the heat exchanger 2 be traversed by a cooling gas at a lower temperature, then the adiabatic mode is activated (by dispensing the evaporative liquid) for not necessarily all the evaporative portions, but for only one, at least initially. If the heat to be disposed of by the heat exchanger continues to increase, it is possible to activate in succession the adiabatic mode of another evaporative portion, thus obtaining saving of evaporative liquid, and a decrease in the wear to the evaporative bodies. In fact, by breaking up the flowrate of evaporative liquid and selecting the supply to the various evaporative portions, there is the effect of being able to use only the minimum required quantity of evaporative liquid.

Further, the various evaporative portions may be wetted alternately, with a sort of rotation of the uses, so as to wear down uniformly the evaporative bodies and increase the durability thereof, as the special cellulose material of which they are made is wetted only when necessary.

The supply means may comprise, as in the illustrated embodiments, a supply circuit with evaporative liquid (water) to be discarded so as not to have to perform treatment on the liquid although it is possible to provide a circuit with a recirculating system for recirculating liquid.

## Claims

1. Heat exchange apparatus (1), comprising:
- at least one heat exchanger (2) comprising tube means in which a process fluid to be cooled circulates;
- ventilation means (7) for generating a flow of cooling gas passing through said tube means;
- evaporative means arranged to be traversed by said flow before said tube means, said evaporative means comprising two or more evaporative portions (8; 9) that are distinct from each other, a first evaporative portion of which comprises at least one first evaporative body (8) and a second evaporative portion comprises at least one second evaporative body (9), each of said two or more evaporative portions (8; 9) being arranged for being traversed by a respective fraction of said flow;
- supply means (12; 13) for supplying an evaporative liquid to said evaporative means to humidify said flow, said supply means being configured to supply the evaporative liquid to said at least one first evaporative body (8) and to said at least one second evaporative body (9) independently of one another;
- at least one temperature sensor (14) for measuring the temperature of the process fluid exiting said tube means;
- control means configured to control said supply means (12; 13) so as to supply the evaporative liquid to said at least one first evaporative body (8) and at least one second evaporative body (9) according to the temperature measured by said temperature sensor (14);
**characterized in that** said at least one second evaporative body (9) is arranged alongside to said at least one first evaporative body (8).

2. Apparatus according to claim 1, wherein said at least one first and one second evaporative bodies (8) and (9) are so arranged that one direction of a fraction of said flow that traverses said at least one first evaporative body (8) is concordant with and alongside a direction of a fraction of said flow that traverses said at least one second evaporative body (9).

3. Apparatus according to claim 1 or 2, wherein said first evaporative portion comprises at least two first evaporative bodies (8) situated on two opposite sides with respect to said tube means and said second evaporative portion comprises at least two second evaporative bodies (9) situated on two opposite sides with respect to said tube means, each of said at least two second evaporative bodies (9) being arranged alongside a respective first evaporative body (8).

4. Apparatus according to any one of the preceding claims, wherein said tube means comprises at least two tube batteries arranged opposite one another, in particular arranged in a V, said at least two tube batteries being separated by a space above which said ventilation means (7) is arranged and being situated on two sides opposite one another with respect to a separating plane, said at least one first evaporative body (8) and said at least one second evaporative body (9) being arranged on the same side with respect to said separating plane.

5. Apparatus according to any one of the preceding claims, comprising at least one third evaporative portion with at least one third evaporative body that is supplied by said supply means with the evaporative liquid independently of said first evaporative body and of said second evaporative body and by said control means according to the temperature measured by said temperature sensor.

6. Apparatus according to any one of the preceding claims, wherein said control means is configured to so control said supply means that, when at least one evaporative portion (8; 9) is not supplied with the evaporative liquid and the temperature measured by said temperature sensor (14) is greater than or the same as a set value (Tsup), then only said at least one evaporative portion (8; 9), which was not supplied with the evaporative liquid, starts to be supplied with the evaporative liquid.

7. Apparatus according to any one of the preceding claims, comprising two or more humidity sensors (16; 17), each of which is operationally associated with a respective evaporative portion (8; 9) to measure the humidity of the cooling gas between the respective evaporative portion (8; 9) and said heat exchanger (2), said control means being configured to control said supply means (12; 13) on the basis of the humidity measured by said two or more humidity sensors (16; 17).

8. Apparatus according to claim 7, wherein said control means is configured to control the supply of the evaporative liquid to at least one of said evaporative portions (8; 9) by said supply means (12; 13) according to the humidity measured by the respective humidity sensor (16; 17); said control means being configured, in particular, to control the supply of the evaporative liquid so as not to increase the supply if the measured humidity is greater than or the same as a set value.

9. Apparatus according to claim 7 or 8, comprising sensor means (15) to measure the humidity of the cooling gas before it traverses said evaporative means, said control means being configured to emit a fault signal if an evaporative portion (8; 9) is supplied with the evaporative liquid and the humidity sensor (16; 17) operationally associated with said evaporative portion (8; 9) does not detect a certain increase in humidity with respect to the humidity measured by said sensor means (15) after a set period of time.

10. Apparatus according to any one of the preceding claims, wherein said control means is configured to so control said supply means that, when at least one evaporative portion (8; 9) is supplied with the evaporative liquid and the temperature measured by said temperature sensor (14) is less than or the same as a set value (Tinf), then the supply of the evaporative liquid is diminished only to said at least one evaporative portion (8; 9) without modifying the supply to other evaporative portions.

11. Apparatus according to any one of the preceding claims, wherein said control means is configured to receive a lower limit of the flow of the cooling gas and to control said ventilation means (7) and said supply means (12; 13) on the basis of the temperature measured by said temperature sensor (14) such that, when the flow (V) of the cooling gas is the same as said lower limit and the supply flowrate of the evaporative liquid to at least one evaporative portion (8; 9) is not nil, if the measured temperature is less than or the same as a set value (Tinf), then the supply flowrate of the evaporative liquid is lowered in said at least one evaporative portion whereas the flow (V) of the cooling gas is not modified.

12. Apparatus according to claim 11, wherein said lower limit is a value greater than zero of the flow (V) of the cooling gas or greater than 50% of the maximum value of the flow (V) of the cooling gas, i.e. the value at maximum power of the ventilation means (7).

13. Apparatus according to any one of the preceding claims, wherein said control means is configured to receive an upper limit of the flow of the cooling gas and to control said ventilation means (7) and said supply means (12; 13) on the basis of the temperature measured by said temperature sensor (14) such that, when the flow (V) of the cooling gas is the same as said upper limit and the supply flowrate of the evaporative liquid to at least one evaporative portion (8; 9) is nil, if the measured temperature is greater than or the same as a set value (Tsup), then the supply flowrate of the evaporative liquid is increased in said at least one evaporative portion (8; 9) whereas the flow (V) of the cooling gas is not modified.

14. Heat exchange apparatus (1), according to any one of the preceding claims, wherein the control means comprise:
- programmable electronic control means configured to control said supply means (12; 13) so as to supply the evaporative liquid to said at least one first evaporative body (8) and to said at least one second evaporative body (9) according to the temperature measured by said temperature sensor (14), said control means being configured to control said supply means so as to select to supply one or the other of said two or more evaporative portions (8; 9) according to the period of time in which each evaporative portion has been wetted with the evaporative liquid so as to tend to a balance of the periods of wetting time between the various evaporative portions.

15. Heat exchange method, comprising the steps of providing a heat exchange apparatus (1) according to any one of the preceding claims and controlling the supply means (12; 13) of said apparatus to supply the evaporative liquid independently between the two or more evaporative portions (8; 9) of the evaporative means of said apparatus (1).

## Patentansprüche

1. Wärmeaustauschvorrichtung (1), die umfasst:
- mindestens einen Wärmetauscher (2) mit einer Rohreinrichtung, in der ein zu kühlendes Prozessfluid zirkuliert;
- eine Belüftungseinrichtung (7) zum Erzeugen einer Strömung von Kühlgas, das durch die Rohreinrichtung hindurchströmt;
- eine Verdampfungseinrichtung, die so, dass sie von der Strömung durchströmt wird, vor der Rohreinrichtung angeordnet ist, wobei die Verdampfungseinrichtung zwei oder mehr Verdampfungsabschnitte (8; 9) umfasst, die voneinander verschieden sind, von denen ein erster Verdampfungsabschnitt mindestens einen ersten Verdampfungskörper (8) umfasst und ein zweiter Verdampfungsabschnitt mindestens einen zweiten Verdampfungskörper (9) umfasst, wobei jeder der zwei oder mehr Verdampfungsabschnitte (8; 9) angeordnet ist, damit er durch einen jeweiligen Anteil der Strömung durchströmt wird;
- eine Zufuhreinrichtung (12; 13) zum Zuführen einer Verdampfungsflüssigkeit zur Verdampfungseinrichtung, um die Strömung zu befeuchten, wobei die Zufuhreinrichtung dazu eingerichtet ist, die Verdampfungsflüssigkeit zu dem mindestens einen ersten Verdampfungskörper (8) und zu dem mindestens einen zweiten Verdampfungskörper (9) unabhängig voneinander zuzuführen;
- mindestens einen Temperatursensor (14) zum Messen der Temperatur des Prozessfluids, das die Rohreinrichtung verlässt;
- eine Steuereinrichtung, die dazu eingerichtet ist, die Zufuhreinrichtung (12; 13) zu steuern, um die Verdampfungsflüssigkeit zu dem mindestens einen ersten Verdampfungskörper (8) und mindestens einen zweiten Verdampfungskörper (9) gemäß der durch den Temperatursensor (14) gemessenen Temperatur zuzuführen;
**dadurch gekennzeichnet, dass** der mindestens eine zweite Verdampfungskörper (9) längsseits des mindestens einen ersten Verdampfungskörpers (8) angeordnet ist.

2. Vorrichtung nach Anspruch 1, wobei der mindestens eine erste und eine zweite Verdampfungskörper (8) und (9) so angeordnet sind, dass eine Richtung eines Anteils der Strömung, der den mindestens einen ersten Verdampfungskörper (8) durchströmt, gleichsinnig mit und längsseits einer Richtung eines Anteils der Strömung ist, der den mindestens einen zweiten Verdampfungskörper (9) durchströmt.

3. Vorrichtung nach Anspruch 1 oder 2, wobei der erste Verdampfungsabschnitt mindestens zwei erste Verdampfungskörper (8) umfasst, die auf zwei entgegengesetzten Seiten mit Bezug auf die Rohreinrichtung liegen, und der zweite Verdampfungsabschnitt mindestens zwei zweite Verdampfungskörper (9) umfasst, die auf zwei entgegengesetzten Seiten mit Bezug auf die Rohreinrichtung liegen, wobei jeder der mindestens zwei zweiten Verdampfungskörper (9) längsseits eines jeweiligen ersten Verdampfungskörpers (8) angeordnet ist.

4. Vorrichtung nach einem der vorangehenden Ansprüche, wobei die Rohreinrichtung mindestens zwei Rohrbatterien umfasst, die zueinander entgegengesetzt angeordnet sind, insbesondere in einem V angeordnet sind, wobei die mindestens zwei Rohrbatterien durch einen Raum getrennt sind, über dem die Belüftungseinrichtung (7) angeordnet ist, und auf zwei Seiten entgegengesetzt zueinander mit Bezug auf eine Trennebene liegen, wobei der mindestens eine erste Verdampfungskörper (8) und der mindestens eine zweite Verdampfungskörper (9) auf derselben Seite mit Bezug auf die Trennebene angeordnet sind.

5. Vorrichtung nach einem der vorangehenden Ansprüche mit mindestens einem dritten Verdampfungsabschnitt mit mindestens einem dritten Verdampfungskörper, der durch die Zufuhreinrichtung mit der Verdampfungsflüssigkeit unabhängig von dem ersten Verdampfungskörper und von dem zweiten Verdampfungskörper und durch die Steuereinrichtung gemäß der durch den Temperatursensor gemessenen Temperatur versorgt wird.

6. Vorrichtung nach einem der vorangehenden Ansprüche, wobei die Steuereinrichtung dazu eingerichtet ist, die Zufuhreinrichtung so zu steuern, dass, wenn mindestens ein Verdampfungsabschnitt (8; 9) nicht mit der Verdampfungsflüssigkeit versorgt wird und die durch den Temperatursensor (14) gemessene Temperatur größer als oder gleich wie ein festgelegter Wert (Tsup) ist, dann nur der mindestens eine Verdampfungsabschnitt (8; 9), der nicht mit der Verdampfungsflüssigkeit versorgt wurde, beginnt mit der Verdampfungsflüssigkeit versorgt zu werden.

7. Vorrichtung nach einem der vorangehenden Ansprüche mit zwei oder mehr Feuchtigkeitssensoren (16; 17), von denen jeder betriebsfähig einem jeweiligen Verdampfungsabschnitt (8; 9) zugeordnet ist, um die Feuchtigkeit des Kühlgases zwischen dem jeweiligen Verdampfungsabschnitt (8; 9) und dem Wärmetauscher (2) zu messen, wobei die Steuereinrichtung dazu eingerichtet ist, die Zufuhreinrichtung (12; 13) auf der Basis der durch die zwei oder mehr Feuchtigkeitssensoren (16; 17) gemessenen Feuchtigkeit zu steuern.

8. Vorrichtung nach Anspruch 7, wobei die Steuereinrichtung dazu eingerichtet ist, die Zufuhr der Verdampfungsflüssigkeit zu mindestens einem der Verdampfungsabschnitte (8; 9) durch die Zufuhreinrichtung (12; 13) gemäß der durch den jeweiligen Feuchtigkeitssensor (16; 17) gemessenen Feuchtigkeit zu steuern; wobei die Steuereinrichtung insbesondere dazu eingerichtet ist, die Zufuhr der Verdampfungsflüssigkeit zu steuern, um die Zufuhr nicht zu erhöhen, wenn die gemessene Feuchtigkeit größer als oder gleich wie ein festgelegter Wert ist.

9. Vorrichtung nach Anspruch 7 oder 8 mit einer Sensoreinrichtung (15), um die Feuchtigkeit des Kühlgases zu messen, bevor es die Verdampfungseinrichtung durchströmt, wobei die Steuereinrichtung dazu eingerichtet ist, ein Fehlersignal auszusenden, wenn ein Verdampfungsabschnitt (8; 9) mit der Verdampfungsflüssigkeit versorgt wird und der Feuchtigkeitssensor (16; 17), der dem Verdampfungsabschnitt (8; 9) betriebsfähig zugeordnet ist, keine bestimmte Erhöhung der Feuchtigkeit mit Bezug auf die durch die Sensoreinrichtung (15) gemessene Feuchtigkeit nach einer festgelegten Zeitdauer detektiert.

10. Vorrichtung nach einem der vorangehenden Ansprüche, wobei die Steuereinrichtung dazu eingerichtet ist, die Zufuhreinrichtung so zu steuern, dass, wenn mindestens ein Verdampfungsabschnitt (8; 9) mit der Verdampfungsflüssigkeit versorgt wird und die durch den Temperatursensor (14) gemessene Temperatur geringer als oder gleich wie ein festgelegter Wert (Tinf) ist, dann die Zufuhr der Verdampfungsflüssigkeit nur zu dem mindestens einen Verdampfungsabschnitt (8; 9) vermindert wird, ohne die Zufuhr zu anderen Verdampfungsabschnitten zu modifizieren.

11. Vorrichtung nach einem der vorangehenden Ansprüche, wobei die Steuereinrichtung dazu eingerichtet ist, eine untere Grenze der Strömung des Kühlgases zu empfangen und die Belüftungseinrichtung (7) und die Zufuhreinrichtung (12; 13) auf der Basis der durch den Temperatursensor (14) gemessenen Temperatur so zu steuern, dass, wenn die Strömung (V) des Kühlgases gleich wie die untere Grenze ist und die Zufuhrdurchflussrate der Verdampfungsflüssigkeit zu mindestens einem Verdampfungsabschnitt (8; 9) nicht null ist, wenn die gemessene Temperatur geringer als oder gleich wie ein festgelegter Wert (Tinf) ist, dann die Zufuhrdurchflussrate der Verdampfungsflüssigkeit in dem mindestens einen Verdampfungsabschnitt gesenkt wird, wohingegen die Strömung (V) des Kühlgases nicht modifiziert wird.

12. Vorrichtung nach Anspruch 11, wobei die untere Grenze ein Wert, der größer ist als null, der Strömung (V) des Kühlgases oder größer als 50 % des Maximalwerts der Strömung (V) des Kühlgases, d. h. des Werts bei maximaler Leistung der Belüftungseinrichtung (7), ist.

13. Vorrichtung nach einem der vorangehenden Ansprüche, wobei die Steuereinrichtung dazu eingerichtet ist, eine obere Grenze der Strömung des Kühlgases zu empfangen und die Belüftungseinrichtung (7) und die Zufuhreinrichtung (12; 13) auf der Basis der durch den Temperatursensor (14) gemessenen Temperatur so zu steuern, dass, wenn die Strömung (V) des Kühlgases gleich wie die obere Grenze ist und die Zufuhrdurchflussrate der Verdampfungsflüssigkeit zu mindestens einem Verdampfungsabschnitt (8; 9) null ist, wenn die gemessene Temperatur größer als oder gleich wie ein festgelegter Wert (Tsup) ist, dann die Zufuhrdurchflussrate der Verdampfungsflüssigkeit in dem mindestens einen Verdampfungsabschnitt (8; 9) erhöht wird, wohingegen die Strömung (V) des Kühlgases nicht modifiziert wird.

14. Wärmeaustauschvorrichtung (1) nach einem der vorangehenden Ansprüche, wobei die Steuereinrichtung umfasst:
- eine programmierbare elektronische Steuereinrichtung, die dazu eingerichtet ist, die Zufuhreinrichtung (12; 13) zu steuern, um die Verdampfungsflüssigkeit zu dem mindestens einen ersten Verdampfungskörper (8) und zu dem mindestens einen zweiten Verdampfungskörper (9) gemäß der durch den Temperatursensor (14) gemessenen Temperatur zuzuführen, wobei die Steuereinrichtung dazu eingerichtet ist, die Zufuhreinrichtung zu steuern, um auszuwählen, den einen oder den anderen der zwei oder mehr Verdampfungsabschnitte (8; 9) gemäß der Zeitdauer zu versorgen, in der jeder Verdampfungsabschnitt mit der Verdampfungsflüssigkeit benetzt wurde, so dass dies zu einem Gleichgewicht der Benetzungszeitdauern zwischen den verschiedenen Verdampfungsabschnitten tendiert.

15. Wärmeaustauschverfahren mit den Schritten der Bereitstellung einer Wärmeaustauschvorrichtung (1) nach einem der vorangehenden Ansprüche und der Steuerung der Zufuhreinrichtung (12; 13) der Vorrichtung, um die Verdampfungsflüssigkeit unabhängig zwischen den zwei oder mehr Verdampfungsabschnitten (8; 9) der Verdampfungseinrichtung der Vorrichtung (1) zuzuführen.

## Revendications

1. Appareil d'échange de chaleur (1), comprenant :
- au moins un échangeur de chaleur (2) comprenant des moyens tubulaires dans lesquels circule un fluide de traitement à refroidir ;
- des moyens de ventilation (7) pour générer un écoulement de gaz de refroidissement passant à travers lesdits moyens tubulaires ;
- des moyens d'évaporation agencés pour être traversés par ledit écoulement avant lesdits moyens tubulaires, lesdits moyens d'évaporation comprenant deux ou plus portions d'évaporation (8 ; 9) qui sont distinctes l'une de l'autre, parmi lesquelles une première portion d'évaporation comprend au moins un premier corps d'évaporation (8) et une deuxième portion d'évaporation comprend au moins un deuxième corps d'évaporation (9), chacune desdites deux ou plus portions d'évaporation (8 ; 9) étant agencée pour être traversée par une fraction respective dudit écoulement ;
- des moyens d'alimentation (12 ; 13) pour alimenter en liquide d'évaporation lesdits moyens d'évaporation pour humidifier ledit écoulement, lesdits moyens d'alimentation étant configurés pour alimenter en liquide d'évaporation ledit au moins un premier corps d'évaporation (8) et ledit au moins un deuxième corps d'évaporation (9) indépendamment l'un de l'autre ;
- au moins un capteur de température (14) pour mesurer la température du fluide de traitement sortant desdits moyens tubulaires ;
- des moyens de commande configurés pour commander lesdits moyens d'alimentation (12 ; 13) de manière à alimenter en liquide d'évaporation ledit au moins un premier corps d'évaporation (8) et ledit au moins un deuxième corps d'évaporation (9) en fonction de la température mesurée par ledit capteur de température (14) ;
**caractérisé en ce que** ledit au moins un deuxième corps d'évaporation (9) est agencé à côté dudit au moins un premier corps d'évaporation (8).

2. Appareil selon la revendication 1, dans lequel lesdits au moins un premier et au moins un deuxième corps d'évaporation (8) et (9) sont agencés de telle sorte qu'une direction d'une fraction dudit écoulement qui traverse ledit au moins un premier corps d'évaporation (8) soit concordante avec et à côté d'une direction d'une fraction dudit écoulement qui traverse ledit au moins un deuxième corps d'évaporation (9).

3. Appareil selon la revendication 1 ou 2, dans lequel ladite première portion d'évaporation comprend au moins deux premiers corps d'évaporation (8) situés sur deux côtés opposés par rapport auxdits moyens tubulaires et ladite deuxième portion d'évaporation comprend au moins deux corps d'évaporation (9) situés sur deux côtés opposés par rapport auxdits moyens tubulaires, chacun desdits au moins deux deuxièmes corps d'évaporation (9) étant agencé à côté d'un premier corps d'évaporation (8) respectif.

4. Appareil selon l'une des revendications précédentes, dans lequel lesdits moyens tubulaires comprennent au moins deux batteries de tubes agencées à l'opposé l'une de l'autre, en particulier agencées en V, lesdites au moins deux batteries de tubes étant séparées par un espace au-dessus duquel lesdits moyens de ventilation (7) sont agencés et étant situées sur deux côtés à l'opposé l'un de l'autre par rapport à un plan de séparation, ledit au moins un premier corps d'évaporation (8) et ledit au moins un deuxième corps d'évaporation (9) étant agencés du même côté par rapport audit plan de séparation.

5. Appareil selon l'une des revendications précédentes, comprenant au moins une troisième portion d'évaporation avec au moins un troisième corps d'évaporation qui est alimenté en liquide d'évaporation indépendamment dudit premier corps d'évaporation et dudit deuxième corps d'évaporation par lesdits moyens d'alimentation et par lesdits moyens de commande en fonction de la température mesurée par ledit capteur de température.

6. Appareil selon l'une des revendications précédentes, dans lequel lesdits moyens de commande sont configurés pour commander lesdits moyens d'alimentation de sorte que, lorsque au moins une portion d'évaporation (8 ; 9) n'est pas alimentée en liquide d'évaporation et la température mesurée par ledit capteur de température (14) est supérieure ou égale à une valeur de consigne (Tsup), alors seulement ladite au moins une portion d'évaporation (8 ; 9), qui n'était pas alimentée en liquide d'évaporation, commence à être alimentée en liquide d'évaporation.

7. Appareil selon l'une des revendications précédentes, comprenant deux ou plus capteurs d'humidité (16 ; 17), chacun d'eux étant fonctionnellement associé à une portion d'évaporation (8 ; 9) respective pour mesurer l'humidité du gaz de refroidissement entre la portion d'évaporation (8 ; 9) respective et ledit échangeur de chaleur (2), lesdits moyens de commande étant configurés pour commander lesdits moyens d'alimentation (12 ; 13) sur la base de l'humidité mesurée par lesdits deux ou plus capteurs d'humidité (16 ; 17).

8. Appareil selon la revendication 7, dans lequel lesdits moyens de commande sont configurés pour commander l'alimentation en liquide d'évaporation d'au moins l'une desdites portions d'évaporation (8 ; 9) par lesdits moyens d'alimentation (12 ; 13) en fonction de l'humidité mesurée par le capteur d'humidité (16 ; 17) respectif ; lesdits moyens de commande étant configurés, en particulier, pour commander l'alimentation en liquide d'évaporation de manière à ne pas augmenter l'alimentation si l'humidité mesurée est supérieure ou égale à une valeur de consigne.

9. Appareil selon la revendication 7 ou 8, comprenant des moyens de capteur (15) pour mesurer l'humidité du gaz de refroidissement avant qu'il ne traverse lesdits moyens d'évaporation, lesdits moyens de commande étant configurés pour émettre un signal de défaut si une portion d'évaporation (8 ; 9) est alimentée en liquide d'évaporation et le capteur d'humidité (16 ; 17) associé fonctionnellement à ladite portion d'évaporation (8 ; 9) ne détecte pas une certaine augmentation d'humidité par rapport à l'humidité mesurée par lesdits moyens de capteur (15) après une période de temps de consigne.

10. Appareil selon l'une des revendications précédentes, dans lequel lesdits moyens de commande sont configurés pour commander lesdits moyens d'alimentation de sorte que, lorsque au moins une portion d'évaporation (8 ; 9) est alimentée en liquide d'évaporation et la température mesurée par ledit capteur de température (14) est inférieure ou égale à une valeur de consigne (Tinf), alors l'alimentation en liquide d'évaporation est diminuée seulement à ladite au moins une portion d'évaporation (8 ; 9) sans modifier l'alimentation d'autres portions d'évaporation.

11. Appareil selon l'une des revendications précédentes, dans lequel lesdits moyens de commande sont configurés pour recevoir une limite inférieure de l'écoulement du gaz de refroidissement et pour commander lesdits moyens de ventilation (7) et lesdits moyens d'alimentation (12 ; 13) sur la base de la température mesurée par ledit capteur de température (14) de sorte que, lorsque l'écoulement (V) du gaz de refroidissement est égal à ladite limite inférieure et le débit d'alimentation en liquide d'évaporation à au moins une portion d'évaporation (8 ; 9) n'est pas nul, si la température mesurée est inférieure ou égale à une valeur de consigne (Tinf), alors le débit d'alimentation en liquide d'évaporation est réduit dans ladite au moins une portion d'évaporation tandis que l'écoulement (V) du gaz de refroidissement n'est pas modifié.

12. Appareil selon la revendication 11, dans lequel ladite limite inférieure est une valeur supérieure à zéro de l'écoulement (V) du gaz de refroidissement ou supérieure à 50 % de la valeur maximale de l'écoulement (V) du gaz de refroidissement, c'est-à-dire la valeur à une puissance maximale des moyens de ventilation (7).

13. Appareil selon l'une des revendications précédentes, dans lequel lesdits moyens de commande sont configurés pour recevoir une limite supérieure de l'écoulement du gaz de refroidissement et pour commander lesdits moyens de ventilation (7) et lesdits moyens d'alimentation (12 ; 13) sur la base de la température mesurée par ledit capteur de température (14) de sorte que, lorsque l'écoulement (V) du gaz de refroidissement est égal à ladite limite supérieure et le débit d'alimentation en liquide d'évaporation à au moins une portion d'évaporation (8 ; 9) est nul, si la température mesurée est supérieure ou égale à une valeur de consigne (Tsup), alors le débit d'alimentation en liquide d'évaporation est augmenté dans ladite au moins une portion d'évaporation (8 ; 9), tandis que l'écoulement (V) du gaz de refroidissement n'est pas modifié.

14. Appareil d'échange de chaleur (1) selon l'une des revendications précédentes, dans lequel les moyens de commande comprennent :
- des moyens de commande électroniques programmables configurés pour commander lesdits moyens d'alimentation (12 ; 13) de manière à alimenter en liquide d'évaporation ledit au moins un premier corps d'évaporation (8) et ledit au moins un deuxième corps d'évaporation (9) en fonction de la température mesurée par ledit capteur de température (14), lesdits moyens de commande étant configurés pour commander lesdits moyens d'alimentation de manière à choisir d'alimenter l'une ou l'autre desdites deux ou plus portions d'évaporation (8 ; 9) en fonction de la période de temps au cours de laquelle chaque portion d'évaporation a été humidifiée avec le liquide d'évaporation de manière à tendre à un équilibre des périodes de temps d'humidification entre les diverses portions d'évaporation.

15. Procédé d'échange de chaleur, comprenant les étapes de la fourniture d'un appareil d'échange de chaleur (1) selon l'une des revendications précédentes et la commande des moyens d'alimentation (12 ; 13) dudit appareil pour alimenter en liquide d'évaporation indépendamment les deux ou plus portions d'évaporation (8 ; 9) des moyens d'évaporation dudit appareil (1).
